# EUROPÄISCHE PATENTANMELDUNG

(11) **EP 1 173 030 A2**
(43) Veröffentlichungstag der Anmeldung: **16.01.2002**
(21) Anmeldenummer: 01890205.6
(22) Anmeldetag: 12.07.2001
(51) Int. Cl.: H04N 9/12

(54) **Plasma-Videowand**

(30) Priorität: 12.07.2000 AT 5062000 U
(71) Anmelder: Song, Chi-Ho, 1040 Wien (AT)
(72) Erfinder: Song, Chi-Ho, 1040 Wien (AT)
(74) Vertreter: Rippel, Andreas, Dipl.-Ing.

(57) **Zusammenfassung**

Videowände (24) werden bei Großveranstaltungen eingesetzt, um allen Zuschauern weit entferntes Geschehen - zum Beispiel auf der Bühne - detailgenau präsentieren zu können.

Eine erfindungsgemäße Videowand (24) wird aus einer Mehrzahl von Plasma-Videomodulen (1) aufgebaut, wobei die Module (1) aus Plasmaschirmen (2) bestehen, deren Pixelgröße (3) mindestens 3mm beträgt, wobei die Stegbreite (25) zwischen den einzelnen Modulen (1) annähernd nur 4mm beträgt.

Dadurch wird ein Nachteil von herkömmlichen Plasma-Videowänden vermieden, der darin besteht, daß aufgrund der geringen Pixelgröße bei herkömmlichen Videowänden eine Vielzahl von Zuleitungen erforderlich ist, die in Stegen zwischen einzelnen Videomodulen angeordnet sind. Diese Stege liegen zwischen den einzelnen Videomodulen und "zerschneiden" das Gesamtbild.

Um eine variable Anzahl von Modulen (1) verwenden zu können und dadurch unterschiedlich große Videowände (24) zu schaffen, ist jedes Modul (1) aus einem Vier-Indikatoren-Block (5) aufgebaut, der an einem Metallrahmen (6) befestigt ist. Die Videowand (24) kann einfach dadurch vergrößert / verkleinert oder aufgestellt / abgebaut werden, daß die einzelnen Metallrahmen (6) miteinander verbunden / voneinander getrennt werden.

## Beschreibung

Die Erfindung bezieht sich auf eine Plasma-Videowand, bestehend aus einer Mehrzahl von Plasma-Videomodulen.

Überall dort wo eine große Anzahl von zumeist eng beieinander stehenden oder sitzenden Menschen über ein Ereignis informiert werden soll, werden von den Veranstaltern Videowände eingesetzt. Auf derartigen Videowänden werden großformatig bewegte oder stehende Bilder gezeigt; beispielsweise werden Videowände zur Übertragung eines Fußballspieles außerhalb des Stadions eingesetzt; auch bei Großkonzerten bekannter Künstler vor großen Zuschauermassen finden Videowände Verwendung, um den im Verhältnis zum Zuschauerraum sehr kleinen Künstler allen Zuschauern zu zeigen. Dadurch ist es nicht nur den Zuschauern auf den vorderen Plätzen möglich den Künstler zu sehen.

Es läßt sich sagen, daß Videowände in zunehmenden Maße bei allen Großveranstaltungen eingesetzt werden, um auch den Zuschauern in der letzten Reihe "hautnah" am (auf der Bühne oder sonst wo vor sich gehenden) Geschehen "teilhaben" zu lassen.

Auch stehende Bilder - teilweise in einer langsamen Abfolge in der Art einer "Diashow" - werden auf großen Videowänden einem großen Publikum gezeigt.

Aufgrund des hohen rechnerischen Standards ist es möglich, das Bild auf derartigen Videowänden durch sehr kleine Bildpunkte entstehen zu lassen. Diese geringe Pixelgröße bewirkt eine sehr gute Auflösung des Bildes, wobei aber diese gute Auflösung mit zunehmender Entfernung von der Videowand vom menschlichen Auge nicht wahrgenommen werden kann, das heißt, daß das Bild "besser" ist, als es überhaupt notwendig wäre.

Handelsübliche Plasma-Videowände entwickelten sich aus herkömmlichen Heimfarbfernsehgeräten/Computermonitoren, bei denen der Betrachter das gezeigte Bild aus einer geringen Entfernung vom Schirm wahrnimmt, so daß eine geringe Pixelgröße notwendig war.

Die Erfindung geht nun von der Erkenntnis aus, daß die geringe Pixelgröße handelsüblicher Videowände zwar eine gute Auflösung des Bildes ergibt, die große Breite der Stege zwischen den einzelnen Videomodulen jedoch äußerst störend wirkt.

Da die bisher handelsüblichen Plasmabildschirme im Unterschied zu der Erfindung nicht für den Aufbau von Plasmabildwänden konzipiert sind, hat ein daraus erfolgter Aufbau einer Plasma-Videowand zwei gravierende Nachteile: Für die koordinierende Steuerung der Einzelbildschirme muß ein eigenes Gerät, ein "Splitter" eingesetzt werden, und die so aus Einzelbildschirmen aufgebaute Plasma-Videowand wird durch die Betrachtung störende, breite "Stege" unterteilt.

Die Erfindung hat es sich nun zum Ziel gesetzt eine Plasma-Videowand mit veränderbarer Größe zu schaffen, bei der die störenden Stege zwischen den Videomodulen auf ein Mindestmaß reduziert werden, das heißt, ab einer Entfernung von wenigen Metern vom menschlichen Auge nicht mehr wahrgenommen werden, wobei auch die Steuerung der Videowand ohne zusätzliche Geräte ("Splitter") erfolgt.

Aufgrund dieser Erkenntnis wird eine modular aufgebaute Videowand geschaffen, bei der die Module aus Plasmaschirmen bestehen, deren Pixelgröße mindestens 3mm (so zum Beispiel 3, 6 oder 12mm) beträgt, wobei die Stegbreite zwischen den einzelnen Modulen annähernd nur ca. 4mm beträgt.

Um eine variable Anzahl von Modulen verwenden zu können und dadurch unterschiedlich große Videowände zu schaffen, ist es zweckmäßig, daß jedes Modul aus einem Vier-Indikatoren-Block besteht, der an einem Metallrahmen befestigt ist.

Jeder Plasmaschirm besteht dabei aus je einer, aus gasgefüllten Zellen bestehenden Glasplatte (zum Betrachter gewandt) und der darauf an der Rückseite angebrachten Leiterplatte (= Indikatorcontroller).

Die Videowand kann einfach dadurch verkleinert/ vergrößert oder aufgestellt/abgebaut werden, wenn die einzelnen Metallrahmen miteinander verbunden werden.

Um eine Beschädigung der Vier-Indikatoren-Blöcke bei ihrer Befestigung am Metallrahmen zu verhindern ist es sehr zweckmäßig, wenn der Vier-Indikatoren-Block über einen Kunststoffrahmen am Metallrahmen befestigt ist.

Die Steuerung der Videowände erfolgt dadurch, daß jedem Vier-Indikatoren-Block ein Modulcontroller und jedem "Block" (von ein bis mehreren Modulen) je ein Blockcontroller (oder Receivermodul) zugeordnet ist.

Eine besonders zweckmäßige Steuerung ergibt sich dadurch, daß jedem Vier-Indikatoren-Block ein eigener Blockcontroller zugeordnet ist, welcher ein bis mehrere Module gleichzeitig steuern kann.

Die Videowand kann rasch und einfach allen Anforderungen hinsichtlich der Größe angepaßt werden, wenn sich in jedem Modul jeweils eine Stromversorgungseinheit mit Transformator befindet; zur Sicherheit des Bedienpersonals kann diese Stromversorgungseinheit durch eine Schutzplatte abgedeckt werden.

Die Erfindung ist nachstehend in den Figuren beispielsweise erläutert, ohne aber auf diese Beispiele beschränkt zu sein. Dabei zeigt:
- Fig. 1 ein Videomodul, bestehend aus vier Plasmaschirmen (Indikatoren) in einer Frontansicht;
- Fig. 2 zeigt das selbe Videomodul in einer rückwärtigen Ansicht, wobei das Videomodul zum Schutze mit einer hinteren Abdeckplatte versehen ist;
- Fig. 3 zeigt das Videomodul ebenfalls in einer rückwärtigen Ansicht, aber mit abgenommener hinterer Abdeckplatte;
- Fig. 4 zeigt eine aus 5x6 Videomodulen aufgebaute erfindungsgemäße Videowand in einer Vorderansicht.

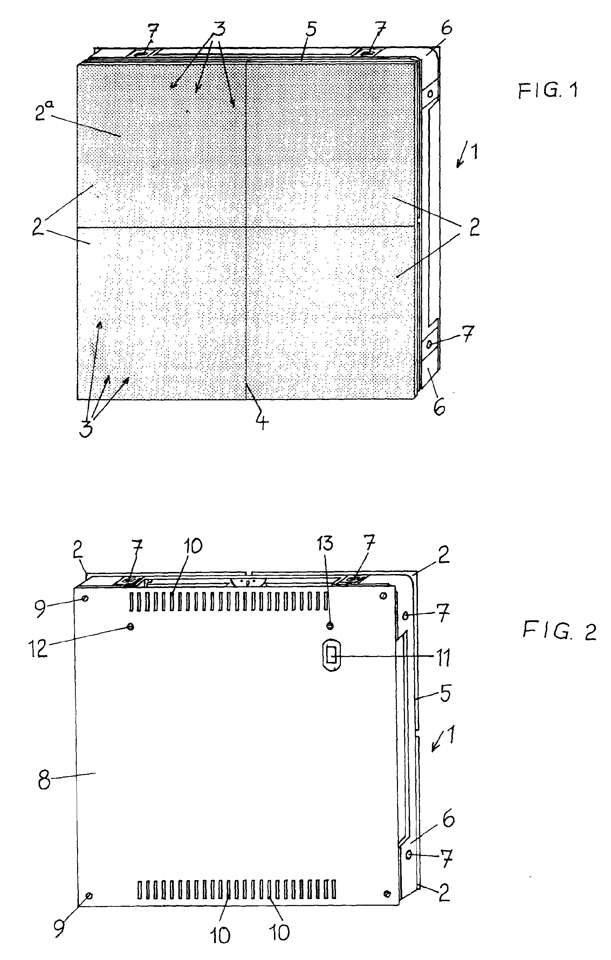

Gemäß der Fig. 1 ist ein Videomodul 1 aus vier Plasmaschirmen 2 (auch Indikatoren genannt) aufgebaut. Ein für Zuschauer sichtbares bewegtes oder stehendes Bild entsteht beispielsweise durch 3, 6 oder 12 mm große Pixel 3 auf den Plasmaschirmen.

Die Front des Plasmaschirmes 2 wird durch eine aus gasgefüllten Zellen bestehenden Glasplatte 2^{a} gebildet.

Dabei reproduzieren tausende von leuchtend roten, grünen und blauen Plasmazellen genauest Pixel für Pixel die digitale Information, die als Eingabe das System erreicht. Zwischen den einzelnen Plasmaschirmen 2 ergeben sich kleine Zwischenräume 4, die aber für den Zuschauer bereits in geringer Entfernung vom Videomodul 1 nicht mehr störend sichtbar sind.

Das gezeigte Plasma-Videomodul 1 ist aus vier Plasmaschirmen 2 aufgebaut, wobei alle vier Plasmaschirme 2 zusammen einen Vier-Indikatoren-Block 5 bilden. Der Vier-Indikatoren-Block 5 ist an einem Metallrahmen 6 befestigt.

Unter Zuhilfenahme von Verschrauböffnungen 7 kann das Videomodul 1 mit weiteren - aber nicht sichtbaren - Videomodulen verbunden werden; in der Folge entsteht dadurch eine gesamte Videowand, deren Größe veränderbar ist.

Gemäß der Fig. 2 wird ein Videomodul aus vier Plasmaschirmen 2 (Indikatoren) -von den vier Plasmaschirmen 2 ist in dieser Figur einer nicht sichtbar- gebildet, wobei die Plasmaschirme 2 zusammen einen Vier-Indikatoren-Block 5 bilden. Der Indikatoren-Block 5 ist an einem Metallrahmen 6 befestigt.

Unter Zuhilfenahme von Verschrauböffnungen 7 kann das Videomodul 1 mit weiteren (nicht sichtbaren) Videomodulen verbunden werden.

An der rückwärtigen Front ist das Videomodul 1 mit einer hinteren Abdeckplatte 8 geschützt, die unter Zuhilfenahme von Schrauben 9 am Metallrahmen 6 befestigt ist.

Ventilationsschlitze 10 in der hinteren Abdeckplatte 8 ermöglichen eine bessere Kühlung des Videomodules 1.

Die hintere Abdeckplatte 8 ist für einen Ein-/Ausschalter 11, für eine Warnlampe 12 und für eine Betriebslampe 13 durchbrochen. Mit Hilfe des Ein-/Ausschalters 11 kann das Videomodul ein- und ausgeschaltet werden. Die Warnlampe 12 signalisiert einen eventuell aufgetretenen Fehler im Videomodul 1 und bedeutet dem Benutzer, daß eine Wartung respektive Reparatur durchgeführt werden muß. Die Betriebslampe 13 leuchtet bei eingeschaltetem Videomodul 1 permanent auf und erlischt beim Ausschalten des Videomodules. Der Benutzer kann daher erkennen, ob das Videomodul 1 betriebsbereit ist.

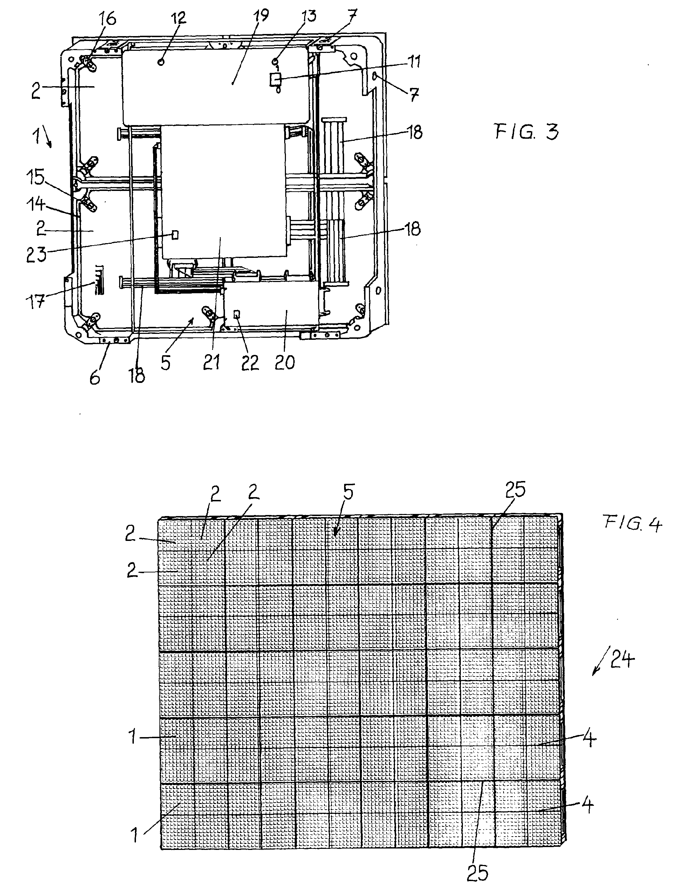

Gemäß der Fig. 3 wird der Vier-Indikatoren-Block 5 des Videomodules 1 aus vier Plasmaschirmen 2 (Indikatoren) gebildet. Diese Plasmaschirme 2 bestehen aus je einer, aus gasgefüllten Zellen bestehenden Glasplatte (zum Betrachter gewandt und daher in dieser Fig. nicht sichtbar) und der darauf an der Rückseite angebrachten Leiterplatte 17 (= Indikator-Controller) und sind über einen Kunststoffrahmen 14 mittels einer Verschraubung 15 am Metallrahmen 6 befestigt. Eine Nase 16 des Kunststoffrahmen 14 erleichtert die Verschraubung des Kunststoffrahmens 14 mit dem Metallrahmen 6.

Die sich auf der Rückseite der Plasmaschirme 2 befindlichen Leiterplatten 17 (Indikatorcontroller) werden durch Flachkabel 18 miteinander und mit der Leiterplatte 21 (Modulcontroller) verbunden.

Um zu vermeiden, daß Bedienerpersonal bei einer Abnahme der hinteren Abdeckplatte und einer versehentlich nicht durchgeführten Unterbrechung der Stromzuführung in den (nicht sichtbaren) Transformator greift, ist dieser durch eine Schutzplatte 19 abgedeckt. Auf dieser Schutzplatte 19 können Warnhinweise aufgebracht werden.

Dem Vier-Indikatoren-Block 5 ist eine Leiterplatte 20 (Blockcontroller) und eine Leiterplatte 21 (Modulcontroller) zugeordnet. Mittels eines Tippschalters 22 können Einstellungen (z.B. Pixeladressierung) durchgerührt werden. Auch mit Hilfe eines Tippschalters 23 an der Leiterplatte 21 werden zusätzlich verschiedene Einstellungen vorgenommen (z.B. Pixeladressierung).

Die Leiterplatte 20 (Blockcontroller) verteilt die Videosignale an mehrere zusammenhängende Module.

Gemäß der Fig. 4 ist eine Videowand 24 aus 5x6 Videomodulen 1 aufgebaut. Jedes Videomodul 1 besteht aus jeweils vier Plasmaschirmen 2, die jeweils einen Vier-Indikatoren-Block 5 bilden. Zwischen den Videomodulen 1 befinden sich Stege 25, deren Breite annähernd 4mm beträgt. Durch diese geringe Breite der Stege 25 wird gewährleistet, daß Betrachter bereits in geringer Entfernung vor der Videowand 24 das auf dieser gezeigte (stehende oder bewegte) Bild störungsfrei, daß heißt ohne Unterbrechungen, wahrnehmen können. Die Zwischenräume 4 zwischen den Plasmaschirmen 2 sind noch schmäler als die Stege 25 und stören beim Betrachten des Bildes überhaupt nicht.

Die erfindungsgemäße Videowand ist nicht auf das gezeigte Ausführungsbeispiel beschränkt; es stellt einen besonderen Vorteil der Erfindung dar, daß nahezu jede endliche Anzahl von Videomodulen zusammengefügt werden kann, um sohin eine unterschiedlich große Videowand zu ergeben.

## Patentansprüche

1. Videowand (24), bestehend aus einer Mehrzahl von Plasma-Videomodulen (1), **dadurch gekennzeichnet, daß** die Module (1) aus Plasmaschirmen (2) (=Indikatoren) bestehen, deren Pixelgröße (3) mindestens 3mm beträgt, wobei die Stegbreite (25) zwischen den einzelnen Modulen annähernd 4mm beträgt.

2. Videowand (24) nach Anspruch 1, **dadurch gekennzeichnet, daß** jedes Modul (1) aus einem Vier-Indikatoren-Block (5) besteht, daß an einem Metallrahmen (6) befestigt ist.

3. Videowand (24) nach Anspruch 1 und 2, **dadurch gekennzeichnet, daß** jeder Plasmaschirm (2) aus je einer, aus gasgefüllten Zellen bestehenden Glasplatte (2^{a}) (zum Betrachter gewandt) und der darauf an der Rückseite angebrachten Leiterplatte 17 (=Indikatorcontroller) besteht.

4. Videowand (24) nach Anspruch 1 und 2, **dadurch gekennzeichnet, daß** zu ihrer Bildung die einzelnen Metallrahmen (6) miteinander verbunden sind.

5. Videowand (24) nach Anspruch 1 bis 4, **dadurch gekennzeichnet, daß** jeder Plasmaschirm (2) (Indikator) über einen Kunststoffrahmen (14) am Metallrahmen (6) befestigt ist.

6. Videowand (24) nach einem der Ansprüche 2 bis 5, **dadurch gekennzeichnet, daß** jedem Vier-Indikatoren-Block (5) eine eigene Leiterplatte (21) (Modulcontroller) zugeordnet ist.

7. Videowand (24) nach einem der Ansprüche 2 bis 6, **dadurch gekennzeichnet, daß** jedem Vier-Indikatoren-Block (5) ein eigener Blockcontroller (20) zugeordnet ist, der ein oder mehrere Module gleichzeitig steuert.

8. Videowand (24) nach einem der Ansprüche 2 bis 7, **dadurch gekennzeichnet, daß** sich in jedem Modul (Vier-Indikatoren-Block 5) jeweils eine Stromversorgungseinheit mit Transformator befindet, die durch die Schutzplatte 19 abgedeckt ist.
